# EUROPÄISCHE PATENTANMELDUNG

(11) **EP 4 400 364 A1**
(43) Veröffentlichungstag der Anmeldung: **17.07.2024**
(21) Anmeldenummer: 23219710.3
(22) Anmeldetag: 22.12.2023
(51) Int. Cl.: B60N 2/90

(54) **MODULTRÄGERANORDNUNG**

(30) Priorität: 02.01.2023 DE 102023100028
(71) Anmelder: Faurecia Autositze GmbH, 30419 Hannover (DE)
(72) Erfinder: Ceglarek, Piotr, 40-807 Katowice (PL); Filip, Slawomir, 08-110 Grabianow (PL); Stasinski, Tomasz, 58-200 Dzierzoniow (PL)
(74) Vertreter: Schober, Mirko

(57) **Zusammenfassung**

Eine Modulträgeranordnung (M) zur Anbringung an der Sitzstruktur eines Kraftfahrzeugsitzes und zum Fixieren pneumatischer Komponenten (2, 3, 5) oder nicht pneumatischer Komponenten weist einen Modulträger (1) mit einer Vorderseite (A) und einer der Vorderseite gegenüberliegenden Rückseite (B) auf. Optional weist die Modulträgeranordnung (M) wenigstens eine weitere Komponente (3) auf, wobei die Modulträgeranordnung (M) ein Gehäuse (4) zur Aufnahme einer pneumatischen Pumpe (5) umfasst. Dabei ist wenigstens ein Teil (41, 42) des Gehäuses oder eine Mehrzahl Teile (41, 42) des Gehäuses (4) in den Modulträger (1) integriert.

## Beschreibung

Die Erfindung betrifft eine Modulträgeranordnung.

Solche Modulträgeranordnungen, wie sie z.B. aus EP 3 845 415 A1 bekannt sind, werden in der Regel an einer Fahrzeugsitzstruktur angebracht und sind dazu ausgebildet, daran bestimmte funktionelle Komponenten, wie zum Beispiel Fluidaktuatoren, Ventilblöcke oder Pumpen zu befestigen. Zudem dienen die Modulträgeranordnungen auch zur Befestigung der entsprechenden Leitungen zum Transport von Luft zu den einzelnen Komponenten. In der Regel finden sich solche Modulträgeran-ordnungen in Fahrzeugsitzen hinter der Sitzpolsterung von Rückenlehne oder Sitzteil.

Bei den bekannten Systemen müssen die funktionellen Komponenten in der Regel einzeln am Modulträger angebracht werden. Es braucht dazu Befestigungen für Leitungen, Ventilblöcke, Pumpen usw. Die Anzahl der Komponenten, die zur vollständigen Montage erforderlich sind und damit die Anzahl der erforderlichen Bauteile, ist bei dieser Vorgehensweise verhältnismäßig hoch.

Aufgabe der vorliegenden Erfindung ist es daher, eine Modulträgeranordnung zu schaffen, bei der die erforderliche Anzahl von Bauteilen gegenüber dem Stand der Technik verringert ist.

Diese Aufgabe wird durch eine Modulträgeranordnung mit den Merkmalen des Anspruchs 1 sowie einen Fahrzeugsitz mit den Merkmalen des Anspruch 10 gelöst. Vorteilhafte Ausführungsformen finden sich in den Unteransprüchen.

Die vorliegende Erfindung reduziert die Anzahl erforderlicher Bauteile dadurch, dass wenigstens ein Teil des Pumpengehäuses bereits im Modulträger vorhanden ist. Eine aufwändige Installation der Pumpe ist damit nicht mehr erforderlich und die Anzahl der Bauteile wird reduziert.

Die erfindungsgemäße Modulträgeranordnung, die zur Anbringung an der Sitzstruktur eines Kraftfahrzeugsitzes und zum Fixieren pneumatischer Komponenten oder nicht pneumatischer Komponenten dient, weist einen Modulträger mit einer Vorderseite und einer der Vorderseite gegenüberliegenden Rückseite auf. Optional weist die Modulträgeranordnung wenigstens eine weitere Komponente auf. Weiter umfasst die Modulträgeranordnung ein Gehäuse zur Aufnahme einer pneumatischen Pumpe. Dabei ist erfindungsgemäß vorgesehen, dass wenigstens ein Teil des Gehäuses oder eine Mehrzahl Teile des Gehäuses in den Modulträger integriert ist.

Dabei kann vorgesehen sein, dass der wenigstens eine in den Modulträger integrierte Teil an den Modulträger angeformt oder in den Modulträger eingeformt ist. Auf diese Weise lässt sich gerade bei der Verwendung von Kunststoff als Ausgangsmaterial für den Modulträger und das Gehäuse eine hochintegrative Modulträgeranordnung schaffen. Grundsätzlich können die Gehäuseteile, integriert oder nicht integriert, für die Pumpe aus demselben Material wie der Modulträger oder aber aus einem davon verschiedenen Material ausgebildet sein. Bei der Wahl verschiedener Materialien ist zum Beispiel die Integration eines Gehäuseteils am Modulträger über ein 2-Komponenten-Spritzgussverfahren denkbar.

Bevorzugt kann das Gehäuse mehrteilig ausgebildet sein, wobei wenigstens zwei Teile miteinander, bevorzugt über ein Schar-nier, eine elastische Verbindung oder ein Filmscharnier, verbunden sind. Externe Bauteile zur Vervollständigung des Gehäuses können dann beispielsweise durch werkzeuglose Verbindungen mit dem bereits am Modulträger integrierten Teil des Gehäuses verbunden werden. Wenn wenigstens ein Teil des Gehäuses ein von dem Modulträger separates Teil ist, kann dieses bevorzugt durch Laserschweißen, Hochfrequenzschweißen, Vibrationsschweißen, Kleben oder Clipsen am Modulträger angebracht sein.

Das Material des Modulträgers und/oder des Gehäuses kann dabei auf unterschiedliche Art und Weise ausgebildet sein. Nach bevorzugten Ausführungsformen kann unter anderem vorgesehen sein, dass das Material ein Kunststoffmaterial, ein Folienmaterial oder ein Filzmaterial umfasst oder daraus besteht. Dabei kann das Trägermaterial bzw. die Modulträgeranordnung bzw. das Gehäuse ein durch Spritzgießen ausgebildetes oder durch Warmformen oder Vakuumgießen ausgebildetes Teil sein oder ein solches aufweisen.

Auch andere Teile lassen sich in die erfindungsgemäße Modulträgeranordnung integrieren. Bevorzugt kann beispielsweise vorgesehen sein, dass der Modulträger integrierte Befestigungsabschnitte zur An- oder Unterbringung von pneumatischen Komponenten und/oder nicht pneumatischen Komponenten umfasst. Die pneumatischen Komponenten können zum Beispiel aus der folgenden Gruppe ausgewählt sein: Pumpe, Ventilblock, Fluidaktuator, Fluidkanal. Als Fluidaktuatoren kommen vor allem pneumatische Blasen in Betracht, die am Modulträger angeordnet sind. Eine nicht pneumatische Komponente kann beispielsweise aus der Gruppe ausgewählt sein, die folgendes umfasst: Vibrationssystemkomponente, Belüftungssystemkomponente, elektrische Komponente, Kabelbaum, Verbinder, Abdeckung. Die optionale weitere Komponente kann eine pneumatische oder nicht pneumatische Komponente sein.

Auch können am Modulträger Abschnitte vorgesehen sein, an denen sich Schlauchleitungen oder Fluidaktuatoren befestigen lassen.

Nach einer weiteren bevorzugten Ausführungsform der erfindungsgemäßen Modulträgeranordnung kann in wenigstens einem der Teile des Gehäuses wenigstens ein Teil eines Luftführungskanals integriert sein. Auf diese Weise kann das Einbringen von Schlauchleitungen entbehrlich sein. Dies spart weitere Bauteile. Bevorzugt ist ein solcher Luftführungskanal dann lediglich ein Anschluss für eine externe Schlauchleitung oder dergleichen.

Eine weitere Ausführungsform der vorliegenden Erfindung sieht vor, dass zwischen dem Modulträger und dem wenigstens einen integrierten Teil des Gehäuses oder in dem wenigstens einen integrierten Teil wenigstens ein Kompensatorbereich ausgebildet ist, der dazu ausgelegt ist, die Übertragung von von einer in dem Gehäuse aufgenommenen Pumpe erzeugten Schwingungen auf den Modulträger zu reduzieren. Ein solcher Kompensatorbereich lässt sich auf unterschiedliche Weise ausbilden. Zum einen ist es möglich, beispielsweise Materialverstärkungen im verwendeten Material des Modulträgers bzw. des integrierten Teils des Gehäuses an geeigneter Stelle anzuordnen. Eine andere Möglichkeit besteht darin, einen solchen Kompensatorbereich aus einem gegenüber dem Modulträger oder dem integrierten Teil des Gehäuses weicheren Material auszubilden, sodass etwaige Schwingungen der Pumpe in diesem weicheren Bereich absorbiert und nicht auf den Modulträger übertragen werden. Dadurch erfährt das gesamte System eine Schwingungsdämpfung, wenn die Pumpe in Betrieb ist. Alternativ oder ergänzend kann ein Kompensatorbereich auch so ausgebildet sein, dass zwischen der Oberfläche des Modulträgers und dem Motor der in das Gehäuse eingesetzten Pumpe ein Ausweichraum oder Verformungsraum zur Verfügung steht, der eine Verformung des Modulträgers kompensieren kann. Gleichzeitig wird hierdurch der Kontakt zwischen dem Modulträger und dem Pumpenmotor vermieden, sodass eine Schwingungsübertragung von der Pumpe auf den Modulträger ebenfalls nicht möglich ist. Grundsätzlich ist eine Ausführungsform vorstellbar, bei der der Zwischenraum zwischen dem Motor einer in das Gehäuse eingesetzten Pumpe und der Oberfläche des Modulträgers einen entsprechenden Kompensatorbereich aufweist. Dies kann dadurch geschehen, dass dieser Zwischenraum leer ist oder ein Kompensatorelement enthält. Beispielsweise können Schaumstoffmaterialien, Gummimaterialien oder andere elastische Materialien als Kompensatorelement eingesetzt werden. Das Kompensatorelement kann unabhängig sein, d.h. als separates Teil ausgebildet sein, oder es kann sich um ein Teil handeln, welches am Modulträger angebracht oder in den Modulträger, zum Beispiel in das integrierte Gehäuseteil, eingelegt bzw. darin integriert ist.

Grundsätzlich ist als Pumpe jede geeignete Pumpentechnik einsetzbar, z.B. eine piezoelektrisch betriebene Pumpe, eine Pumpe mit einem Aktuator mit dielektrischem Elastomer (DEA) eine peristaltische Pumpe oder Schlauchpumpe.

Auch weitere Komponenten können in der erfindungsgemäßen Modulträgeranordnung am entsprechenden Modulträger vorinstalliert sein. Gerade für die Versorgung einer Pumpe oder anderer elektrischer Komponenten mit elektrischer Spannung können bereits Anschlussteile im Modulträger integriert sein. Bevorzugt ist beispielsweise vorgesehen, dass ein elektrisches Verbindungsmittel zur elektrischen Verbindung mit der Pumpe, vorzugsweise ein Stecker oder eine Steckerschnittstelle oder ein Kabelbaum, in dem Modulträger integriert ist. Beispielsweise kann ein solches Verbindungsmittel oder auch eine elektrische Versorgungsleitung beim Herstellen des Modulträgers in diesen eingeformt sein.

Schließlich betrifft die Erfindung einen Fahrzeugsitz, welcher eine Sitzrahmenstruktur und eine über eine Aufhängung an dieser aufgehängte oben beschriebene Modulträgeranordnung aufweist.

Die Erfindung wird nachfolgend anhand der Figuren 1-3 näher erläutert.
- Figur 1 -: zeigt eine erste perspektivische Ansicht einer erfindungsgemäßen Modulträgeranordnung,
- Figur 2 -: zeigt eine zweite perspektivische Ansicht einer erfindungsgemäßen Modulträgeranordnung,
- Figur 3 -: zeigt eine dritte perspektivische Ansicht einer erfindungsgemäßen Modulträgeranordnung.

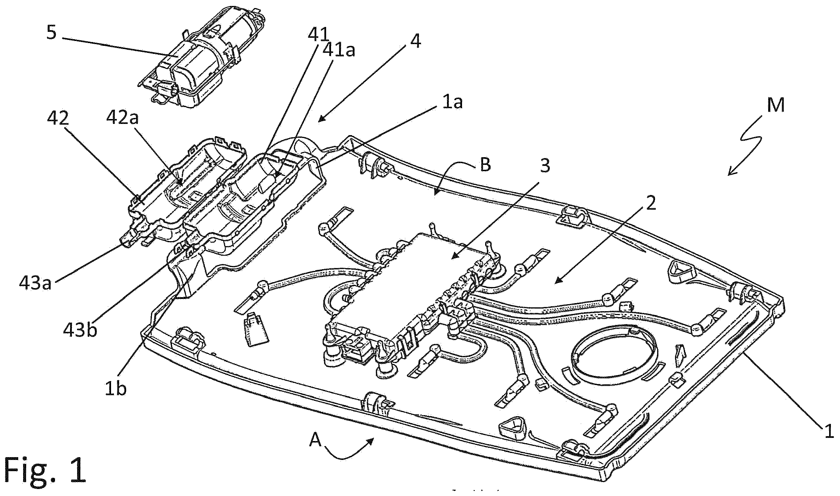

In den Figuren 1 bis 3 ist eine Darstellung zu sehen, welche einen beispielhaften Aufbau einer erfindungsgemäßen Modulträgeranordnung M zeigt.

Der Modulträger 1 weist eine Vorderseite A und eine Rückseite B auf. In der Regel wird die Vorderseite A in Richtung der Fahrtrichtung eines mit der erfindungsgemäßen Modulträgeranordnung M bestückten Fahrzeugsitzes (nicht gezeigt) weisen. Der Modulträger 1 lässt sich dann über eine Aufhängung, bei der es sich im einfachsten Fall um Metalldrähte oder dergleichen handelt, an der Sitzrahmenstruktur eines Fahrzeugsitzes anbringen.

Der Modulträger 1 ist bevorzugt aus einem Material hergestellt, welches bevorzugt Kunststoff, eine Folie oder Filz enthält. Der Modulträger 1 weist in der Regel daran befestigte Luftführungskanäle 2 auf, die Teil eines pneumatischen Systems sind, das beispielsweise Fluidaktoren oder andere pneumatische Komponenten beinhalten kann, zum Beispiel pneumatische Komponenten wie einen Ventilblock 3 und/oder eine Pumpe 5.

Im gezeigten Beispiel umfasst die Modulträgeranordnung M weiter eine weitere Komponente, hier in Gestalt eines Ventilblocks 3, welcher an dem Modulträger 1 angebracht werden kann und an welchen die Luftführungskanäle angeschlossen sind. An die Luftführungskanäle können beispielsweise Fluidaktuatoren, bei denen es sich bevorzugt um fluidbefüllbare Blasen handelt, angeschlossen werden, mit deren Hilfe eine Sitzverstellfunktion oder auch eine Massagefunktion realisierbar ist. Diese Fluidaktuatoren bilden ebenfalls Komponenten eines pneumatischen Systems aus und lassen sich mit im Modulträger 1 und/oder der weiteren Komponente 3 vorhandenen Luftführungskanälen verbinden und dadurch mit Luft beschicken. Eine hier nicht dargestellte Sitzpolsterung kann dann auf der Vorderseite A über den Fluidaktuatoren angebracht werden.

Wie in den Figuren 1 bis 3 dargestellt, ist zumindest ein Teil 41 des einen Aufnahmeraum 41a, 42a zur Aufnahme der Pumpe 5 aufweisenden Gehäuses 4 Teil des Modulträgers 1. Teil bedeutet hier, dass es bevorzugt in den Modulträger integriert ist. Bevorzugt ist das Gehäuse 4 mit zwei Gehäusehälf-ten 41, 42 ausgebildet, von denen wenigstens die eine Gehäusehälfte 41 integraler Bestanteil des Modulträgers 1 ist. Hier ist der Teil 41 über die Verbindungsabschnitte 1a, 1b mit dem übrigen Modulträger 1 verbunden. Diese können auch als Kompensationsbereiche ausgebildet sein, beispielsweise, indem diese eine Verstärkung oder anderweitige Dämpfung aufweisen, die Schwingungen der Pumpe 5 bei deren Betrieb dämpft und somit nicht auf den übrigen Modulträger 1 überträgt.

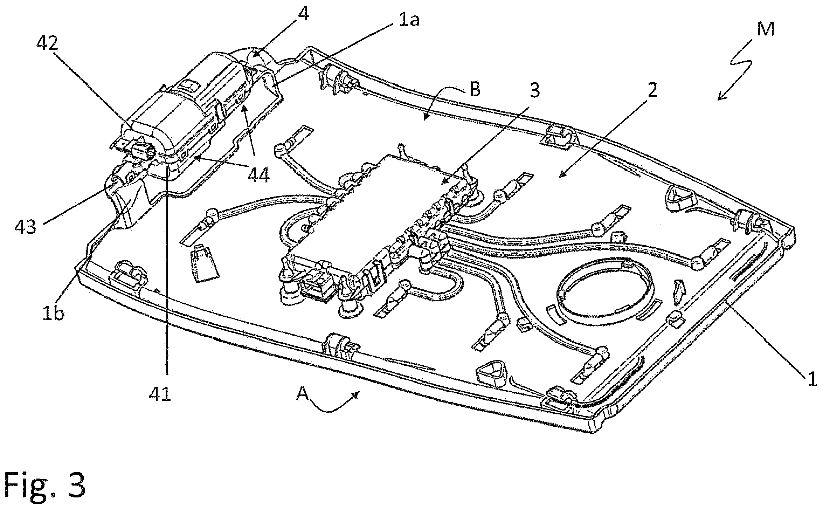

Auch im Inneren 41a, 42a einzelner Gehäuseteile 41, 42 können zusätzliche Kompensatorbereiche vorgesehen sein, die beispielsweise als Aussparungen oder dergleichen ausgebildet sind und dazu dienen, dass eine direkte Übertragung von Schwingungen zwischen Pumpe 5 und Modulträger 1 unterbleibt. Der zweite Teil 42 des Gehäuses 4 kann einstückig mit dem ersten Teil ausgebildet sein, beispielsweise über ein Filmscharnier oder dergleichen, kann aber auch als ein separates Bauteil ausgebildet sein. Bevorzugt weisen auch beide Gehäusehälften 41, 42 Durchführungsabschnitte oder Leitungsabschnitte 43a bzw. 43b auf, die zusammengenommen eine Durchführung 43 (vgl. Figur 3) für ein Versorgungskabel der Pumpe 5 oder aber den Teil einer Luftführungsleitung ausbilden.

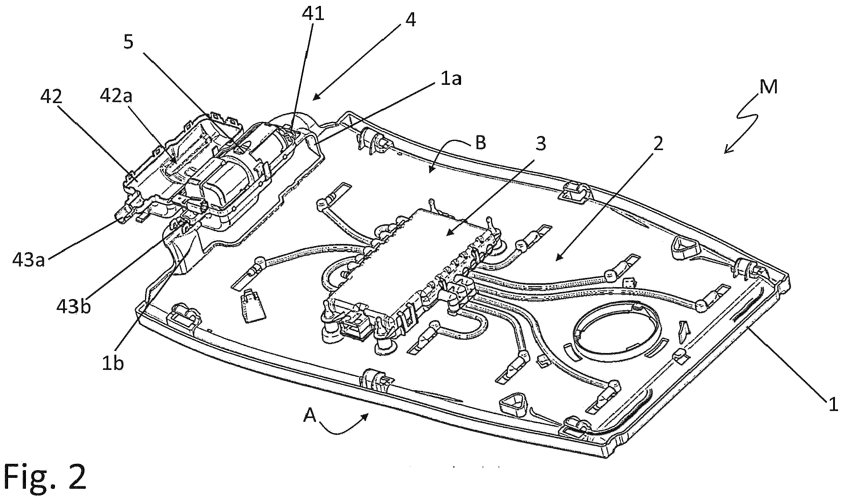

In Figur 1 ist die Situation dargestellt, in der das Gehäuse 4 zur Aufnahme der Pumpe 5 geöffnet ist. Die Pumpe 5 wird bei dieser Ausführungsform zunächst, wie in Figur 2 gezeigt, in die eine Gehäusehälfte 41 eingelegt. Anschließend wird, wie in Figur 3 gezeigt, das Gehäuse 4 verschlossen, indem die weitere Gehäusehälfte 42 über der Pumpe 5 platziert wird, entweder durch Schwenken, wenn insofern bereits eine gelenkige Verbindung zwischen den Teilen 41 und 42 existiert, oder durch Aufsetzen. Eine Fixierung des Teils 42 am Teil 41 kann beispielsweise durch Clipsverbindungen erfolgen, wie dies in Figur 3 durch Position 44 angedeutet ist.

Die erfindungsgemäße Modulträgeranordnung erlaubt es somit, Komponenten eines pneumatischen Systems jedenfalls teilweise in einem Modulträger zu integrieren. Dadurch können Bauteile eingespart werden, da zumindest Teile von pneumatischen Komponenten durch den Modulträger selbst bzw. das Material des Modulträgers gebildet werden.

## Patentansprüche

1. Modulträgeranordnung (M) zur Anbringung an der Sitzstruktur eines Kraftfahrzeugsitzes und zum Fixieren pneumatischer Komponenten (2, 3, 5) oder nicht pneumatischer Komponenten, aufweisend einen Modulträger (1) mit einer Vorderseite (A) und einer der Vorderseite (A) gegenüberliegenden Rückseite (B) und optional wenigstens eine weitere Komponente (3), wobei die Modulträgeranordnung (M) ein Gehäuse (4) zur Aufnahme einer pneumatischen Pumpe (5) umfasst, wobei wenigstens ein Teil (41, 42) des Gehäuses (4) oder eine Mehrzahl Teile (41, 42) des Gehäuses (4) in den Modulträger (1) integriert ist/ sind.

2. Modulträgeranordnung (M) nach Anspruch 1,
**dadurch gekennzeichnet,**
**dass** der wenigstens eine in den Modulträger (1) integrierte Teil (41, 42) an den Modulträger (1) angeformt oder in den Modulträger (1) eingeformt ist.

3. Modulträgeranordnung (M) nach Anspruch 1 oder 2,
**dadurch gekennzeichnet,**
**dass** das Gehäuse (4) mehrteilig ausgebildet ist, wobei wenigstens zwei Teile (41, 42) miteinander, bevorzugt über ein Scharnier, eine elastische Verbindung oder ein Filmscharnier, verbunden sind.

4. Modulträgeranordnung (M) nach einem der vorigen Ansprüche,
**dadurch gekennzeichnet,**
**dass** der Modulträger (1) und/oder das Gehäuse (4) ein Material aufweist, welches ein Kunststoffmaterial, Folien-material oder ein Filzmaterial umfasst oder daraus besteht.

5. Modulträgeranordnung (M) nach einem der vorigen Ansprüche,
**dadurch gekennzeichnet,**
**dass** der Modulträger (1) und/oder das Gehäuse (4) ein Spritzgussteil oder durch Warmformen, Blasformen oder Vakuumgießen geformtes Teil ist.

6. Modulträgeranordnung (M) nach einem der vorigen Ansprüche,
**dadurch gekennzeichnet,**
**dass** die pneumatischen Komponenten (2, 3, 5) ausgewählt sind aus der folgenden Gruppe: Pumpe (5), Ventilblock (3), Fluidaktuator, Fluidkanäle (2).

7. Modulträgeranordnung (M) nach einem der vorigen Ansprüche,
**dadurch gekennzeichnet,**
**dass** wenigstens ein Teil (42) des Gehäuses (4) ein von dem Modulträger (1) separates Teil ist, welches, bevorzugt durch Laserschweißen, Hochfrequenzschweißen, Vibrationsschweißen, Kleben oder Clipsen, am Modulträger (1) angebracht ist.

8. Modulträgeranordnung (M) nach einem der vorigen Ansprüche,
**dadurch gekennzeichnet,**
**dass** in wenigstens einem der Teile (41, 42) wenigstens ein Teil eines Luftführungskanals (2) integriert ist.

9. Modulträgeranordnung (M) nach einem der vorigen Ansprüche,
**dadurch gekennzeichnet,**
**dass** zwischen dem Modulträger (1) und dem wenigstens einen integrierten Teil (41) des Gehäuses (4) oder in dem wenigstens einen integrierten Teil (41) wenigstens ein Kompensatorbereich ausgebildet ist, der dazu ausgelegt ist, die Übertragung von von einer in dem Gehäuse (4) aufgenommenen Pumpe (5) erzeugten Schwingungen auf den Modulträger (1) zu reduzieren.

10. Modulträgeranordnung (M) nach einem der vorigen Ansprüche,
**dadurch gekennzeichnet,**
**dass** ein elektrisches Verbindungsmittel zur elektrischen Verbindung mit einer Pumpe (5), vorzugsweise ein Stecker oder eine Steckerschnittstelle oder ein Kabelbaum, in dem Modulträger (1) integriert ist.

11. Fahrzeugsitz, aufweisend eine Sitzrahmenstruktur und eine über eine Aufhängung an dieser aufgehängten Modulträgeranordnung (M) nach einem der vorigen Ansprüche.
